# FASCICULE DE BREVET EUROPEEN

(11) **EP 0 753 929 B1**
(45) Date de publication et mention de la délivrance du brevet: **20.09.2000**
(21) Numéro de dépôt: 96401394.0
(22) Date de dépôt: 25.06.1996
(51) Int. Cl.: H02K 5/10, H02K 5/20

(54) **Machine électrique tournante comportant un masque amovible de protection et masque de protection pour une telle machine**
Elektrische drehende Maschine mit abnehmbarer schutzender Abdeckung und schutzende Abdeckung für eine solche Maschine
Rotating electrical machine with removable protective cover and a protective cover for such a machine

(30) Priorité: 05.07.1995 FR 9508221
(43) Date de publication de la demande: 15.01.1997
(73) Titulaire: VALEO EQUIPEMENTS ELECTRIQUES MOTEUR, 94000 Créteil (FR)
(72) Inventeur: Desenclos, Stéphane, 62200 Boulogne (FR); Pouchain, David, 62630 Etaples (FR); Dillenseger, Simon, 62170 Saint-Josse (FR); Aeschlimann, Michel, 75012 Paris (FR)
(74) Mandataire: Kohn, Philippe

(56) Documents cités:
- DE-U- 9 012 794
- FR-A- 2 670 069

## Description

La présente invention concerne une machine électrique tournante.

L'invention concerne plus particulièrement un alternateur de véhicule automobile.

L'alternateur appartenant au circuit de charge d'un véhicule automobile se présente sous la forme d'une machine électrique tournante de forme générale cylindrique dont le boîtier, en plusieurs parties, comporte des orifices de ventilation qui permettent la circulation d'air de refroidissement des principaux composants statoriques et rotoriques de l'alternateur.

La circulation d'air peut être provoquée par des ventilateurs, internes ou externes à l'alternateur, ou par des conduits qui forcent un flux d'air de refroidissement en direction de l'alternateur.

Afin d'obtenir un refroidissement efficace, le boîtier comporte une multiplicité de trous et d'orifices de refroidissement.

Ces orifices sont agencés tant dans les faces transversales d'extrémités axiales du boîtier que dans la face latérale de forme générale cylindrique.

La présence de nombreux orifices de ventilation de l'alternateur permet d'obtenir un refroidissement efficace mais elle a pour inconvénient, pour certains de ces orifices de plus grandes dimensions, ou agencés dans des zones particulières de la paroi du boîtier, de présenter un risque de pénétration accidentelle dans l'alternateur de corps étrangers lors des différentes étapes qui suivent la fabrication proprement dite de l'alternateur jusqu'à son montage sur le véhicule.

Il existe notamment un risque important de pénétration accidentelle de vis de fixation qui, lors de la mise en marche de l'alternateur après son montage sur le véhicule peuvent empêcher son fonctionnement, voire entraîner des dégradations importantes de l'alternateur.

Le document DE-U-9 012 794 décrit un couvercle de protection clipsable sur les faces d'extrémité d'une machine électrique tournante.

La présente invention a pour but de remédier à çet inconvénient et elle propose à cet effet une machine électrique tournante du type mentionné précédemment, caractérisée en ce qu'elle comporte un masque amovible de protection qui épouse en moins en partie la forme du boîtier et qui s'étend en regard d'au moins un orifice pour protéger temporairement la machine électrique tournante en évitant un risque de pénétration accidentelle de corps étrangers lors des différentes étapes qui suivent la fabrication proprement dite de la machine avant son montage, notamment sur un véhicule, ou lors d'opérations d'entretien mécanique du véhicule.

Selon d'autres caractéristiques de l'invention :
- le masque de protection comporte au moins un flanc transversal en forme de disque qui s'étend en regard d'une face d'extrémité axiale du boîtier ;
- le flanc transversal comporte une fente radiale qui débouche dans un trou central, pour le passage de l'arbre du rotor de la machine tournante ;
- l'extrémité de l'arbre du rotor qui s'étend à l'extérieur du boîtier porte une poulie, et le flanc transversal du masque de protection est monté entre la poulie et la face d'extrémité axiale du boîtier ;
- le masque de protection comporte un flanc latéral qui s'étend axialement le long de la face latérale cylindrique du boîtier ;
- le flanc latéral s'étend axialement depuis un bord radial extérieur du flanc transversal ;
- le flanc latéral se prolonge par une patte d'extrémité rabattue radialement vers l'intérieur pour coopérer avec une portion de forme complémentaire du boîtier ;
- le masque de protection comporte une patte de préhension ;
- la patte de préhension est réalisée par découpe et pliage d'une partie du flanc latéral dont la découpe s'étend en regard d'une zone de la paroi latérale du boîtier comportant un marquage ;
- le masque de protection est réalisé par découpe et pliage d'une feuille, notamment d'une feuille de carton ou de matière plastique ;
- la machine électrique tournante est un alternateur de véhicule automobile.

L'invention propose également un masque de protection pour une machine électrique tournante réalisée conformément aux enseignements de l'invention.

Les caractéristiques et avantages de l'invention apparaîtront à la lecture de la description détaillée qui va suivre pour la compréhension de laquelle on se reportera aux dessins annexés dans lesquels :
- La figure 1 est une vue schématique latérale d'un alternateur de véhicule automobile équipé d'un premier exemple de réalisation d'un masque amovible de protection conforme aux enseignements de l'invention ;
- la figure 2 est une vue latérale de gauche de la figure 1 ;
- la figure 3 est une vue de dessus de la figure 1;
- la figure 4 est une vue développée, avant pliage, et à plus grande échelle du masque de protection qui équipe l'alternateur représenté aux figures 1 à 3 ; et
- les figures 5 à 7 sont des vues similaires à celles des figures 1, 2 et 4 qui illustrent un second mode de réalisation du masque amovible de protection.

On a représenté sur les figures un alternateur 10 de véhicule automobile qui comporte un boîtier 12 de forme générale cylindrique, d'axe X-X.

Le boîtier 12, qui est réalisé en plusieurs parties, est délimité essentiellement par deux faces radiales d'extrémité axiale opposées 14 et 16 et par une paroi latérale de forme générale cylindrique 18.

L'alternateur comporte un rotor (non représenté sur les figures) dont l'arbre fait saillie axialement à travers la face d'extrémité axiale et porte une poulie 20 d'entraînement en rotation du rotor de l'alternateur 10.

Selon une conception connue, le boîtier 12 comporte de nombreux orifices d'aération et de ventilation.

Certains orifices, tels que les ouïes 22, sont agencés dans la paroi latérale cylindrique et d'autres 24, de plus grandes dimensions, sont formés dans la paroi radiale d'extrémité 14.

Conformément aux enseignements de l'invention, l'alternateur 10 est équipé d'un masque amovible de protection 26 qui est monté sur l'alternateur 10, après sa fabrication, et avant son montage sur le véhicule, pour masquer certains des orifices 22, 24 afin d'éviter la pénétration de corps étrangers dans l'alternateur.

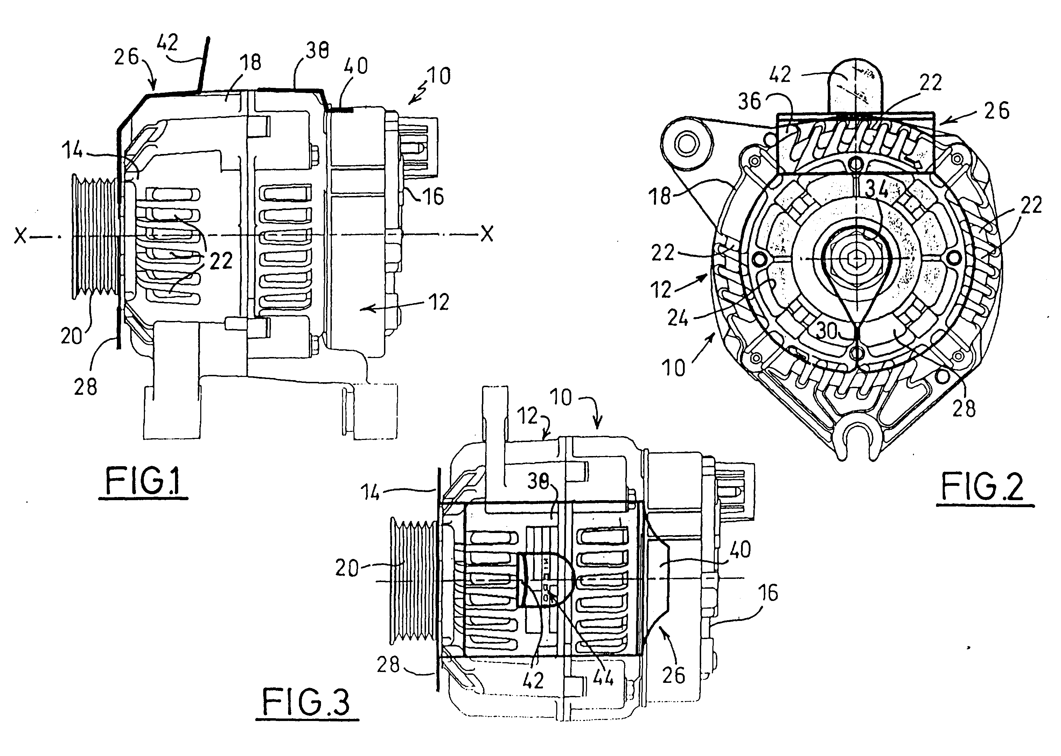

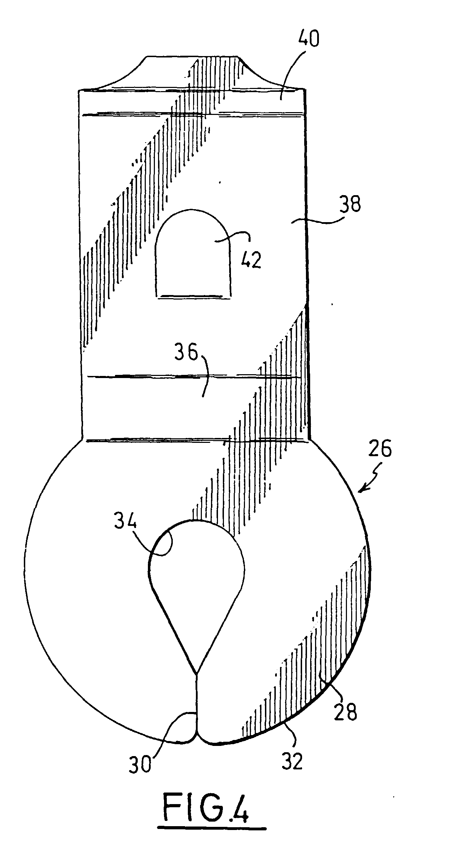

Dans le premier mode de réalisation illustré aux figures 1 à 4, le masque 26 comporte un flanc transversal en forme de disque 28 qui est disposé en regard de la face radiale d'extrémité 14.

Le flanc transversal 28 est monté légèrement serré axialement entre la face d'extrémité 14 et la poulie 20.

Pour permettre son montage sur l'alternateur 10, le flanc transversal 28 comporte une fente radiale d'introduction 30 qui débouche dans le bord circulaire périphérique 32 et dans un trou central 34 permettant notamment le passage de l'arbre du rotor.

La mise en place du flanc 28 s'effectue par déformation élastique du flanc 28 pour le passage de l'arbre par la fente 30.

Le flanc transversal 28 se prolonge par une patte de liaison 36 en forme de bande qui est inclinée sensiblement à 45° par rapport à l'axe X-X pour épouser la forme du boîtier 12 de l'alternateur 10 dans la zone correspondante, et elle se prolonge par un flanc latéral 38 de forme générale rectangulaire qui s'étend axialement au-dessus d'une portion en vis-à-vis de la paroi latérale cylindrique 18 pour masquer certains des orifices 22 prévus dans cette zone.

Pour compléter la fixation et le maintien en position du masque de protection amovible 26 sur l'alternateur 12, le flanc latéral 38 se termine au voisinage de son extrémité libre par une patte de maintien 40 qui est réalisée par pliage et qui est rabattue radialement vers l'intérieur pour épouser le profil de la portion en vis-à-vis de la paroi latérale 18 du boîtier 12.

Afin de pouvoir ôter facilement le masque de protection amovible 26, celui-ci est muni d'une patte de préhension 42 qui est réalisée par découpe et par pliage de manière à s'étendre radialement vers l'extérieur depuis la partie centrale du flanc latéral 38.

Conformément à l'une des caractéristiques de l'invention, la découpe permettant le formage de la patte de préhension 42 peut être située dans une zone en regard d'une portion de la paroi latérale cylindrique 18 comportant un marquage, par exemple une référence ou une marque commerciale apposée sur l'alternateur.

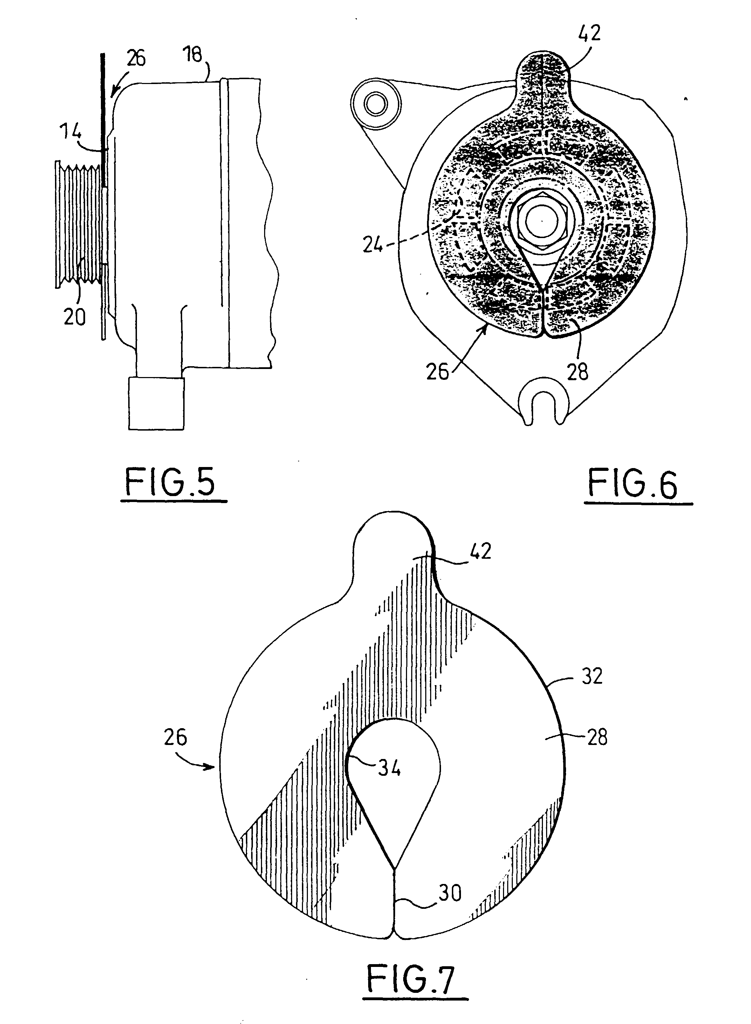

Dans le mode de réalisation illustré aux figures 5 à 7, sur lesquelles des éléments identiques ou similaires à ceux des figures 1 à 4 sont désignés par les mêmes chiffres de référence, le masque de protection amovible 26 a uniquement pour fonction de masquer des orifices 24 formés dans la face radiale d'extrémité 14.

Sa conception est donc limitée à un flanc transversal 28 et sa patte de préhension 42 s'étend radialement vers l'extérieur à partir de son bord périphérique circulaire 32.

Les deux exemples de réalisation illustrés aux figures 1 à 7 ont pour avantage de permettre un positionnement angulaire indifférent autour de l'axe X-X et peuvent donc être utilisés, en fonction du modèle de l'alternateur, pour être positionnés indifféremment et/ou pour masquer certains orifices particuliers 22 formés dans la paroi latérale cylindrique 18 dans le cas du premier mode de réalisation.

Le masque amovible de protection 26 peut être réalisé par découpe et pliage dans un matériau en feuille, par exemple en carton ou dans une feuille de matière plastique de faible épaisseur.

Le masque amovible de protection peut également trouver à s'appliquer pour protéger temporairement l'alternateur, déjà monté sur le véhicule, lors des opérations d'entretien mécanique du véhicule.

## Revendications

1. Machine électrique tournante (10) de forme générale cylindrique délimitée par un boîtier (12) comportant des orifices (22, 24) de ventilation, caractérisée en ce qu'elle comporte un masque amovible de protection (26) qui épouse au moins en partie la forme du boîtier (12) et qui s'étend en regard d'au moins un orifice (22, 24) pour protéger temporairement la machine électrique tournante en évitant un risque de pénétration accidentelle de corps étrangers lors des différentes étapes qui suivent la fabrication proprement dite de la machine avant son montage, notamment sur un véhicule, ou lors d'opérations d'entretien mécanique du véhicule.

2. Machine électrique tournante selon la revendication 1, caractérisée en ce que le masque de protection (26) comporte au moins un flanc transversal (28) en forme de disque qui s'étend en regard d'une face d'extrémité axiale (14) du boîtier (12).

3. Machine électrique tournante selon la revendication 2, caractérisée en ce que le flanc transversal (28) comporte une fente radiale (30) qui débouche dans un trou central (34), pour le passage de l'arbre du rotor de la machine tournante (10).

4. Machine électrique tournante selon la revendication 3, caractérisée en ce que l'extrémité de l'arbre du rotor qui s'étend à l'extérieur du boîtier (12) porte une poulie (20), et en ce que le flanc transversal (26) du masque de protection (26) est monté entre la poulie (20) et la face d'extrémité axiale (14) du boîtier (12).

5. Machine électrique tournante selon l'une quelconque des revendications précédentes, caractérisée en ce que le masque de protection (26) comporte un flanc latéral (38) qui s'étend axialement le long de la face latérale cylindrique (18) du boîtier (12).

6. Machine électrique tournante selon la revendication 5, prise en combinaison avec l'une quelconque des revendications 2 à 4, caractérisée en ce que le flanc latéral (38) s'étend axialement depuis un bord radial extérieur (32) du flanc transversal (28).

7. Machine électrique tournante selon la revendication 6, caractérisée en ce que le flanc latéral (38) se prolonge par une patte d'extrémité (40) rabattue radialement vers l'intérieur pour coopérer avec une portion de forme complémentaire du boîtier (12).

8. Machine électrique tournante selon l'une quelconque des revendications précédentes, caractérisée en ce que le masque de protection (26) comporte une patte de préhension (42).

9. Machine électrique tournante selon la revendication 8 prise en combinaison avec l'une des revendications 6 ou 7, caractérisée en ce que la patte de préhension (42) est réalisée par découpe et pliage d'une partie du flanc latéral (38) dont la découpe s'étend en regard d'une zone (44) de la paroi latérale (18) du boîtier comportant un marquage.

10. Machine électrique tournante selon l'une quelconque des revendications précédentes, caractérisée en ce que le masque de protection (26) est réalisé par découpe et pliage d'une feuille, notamment d'une feuille de carton ou de matière plastique.

11. Machine électrique tournante selon l'une quelconque des revendications précédentes, caractérisée en ce qu'elle est un alternateur de véhicule automobile.

12. Masque de protection pour une machine électrique tournante réalisée conformément à l'une quelconque des revendications précédentes.

## Patentansprüche

1. Rotierende elektrische Maschine (10) mit allgemein zylindrischer Form, die durch ein Gehäuse (12) begrenzt ist, das Belüftungsöffnungen (22, 24) enthält, **dadurch gekennzeichnet**, daß sie eine abnehmbare Schutzabdeckung (26) umfaßt, die sich wenigstens teilweise an die Form des Gehäuses (12) anpaßt und die sich gegenüber wenigstens einer Öffnung (22, 24) erstreckt, um die rotierende elektrische Maschine vorübergehend zu schützen, indem sie das unerwünschte Eindringen von Fremdkörpern während der verschiedenen Phasen, die auf die eigentliche Herstellung der Maschine vor ihrem Einbau, insbesondere in einem Fahrzeug, folgen, oder während mechanischer Wartungsvorgänge am Fahrzeug verhindert.

2. Rotierende elektrische Maschine nach Anspruch 1, **dadurch gekennzeichnet**, daß die Schutzabdeckung (26) wenigstens eine Querflanke (28) in Form einer Scheibe umfaßt, die sich gegenüber einer axialen Abschlußfläche (14) des Gehäuses (12) erstreckt.

3. Rotierende elektrische Maschine nach Anspruch 2, **dadurch gekennzeichnet**, daß die Querflanke (28) einen radialen Schlitz (30) enthält, der in einem mittigen Loch (34) für den Durchgang der Läuferwelle der rotierenden Maschine (10) mündet.

4. Rotierende elektrische Maschine nach Anspruch 3, **dadurch gekennzeichnet**, daß das Ende der Läuferwelle, das sich außerhalb des Gehäuses (12) erstreckt, eine Riemenscheibe (20) trägt und daß die Querflanke (28) der Schutzabdeckung (26) zwischen der Riemenscheibe (20) und der axialen Abschlußfläche (14) des Gehäuses (12) angebracht ist.

5. Rotierende elektrische Maschine nach einem der vorangehenden Ansprüche, **dadurch gekennzeichnet**, daß die Schutzabdeckung (26) eine Seitenflanke (38) umfaßt, die sich axial entlang der zylindrischen Seitenfläche (18) des Gehäuses (12) erstreckt.

6. Rotierende elektrische Maschine nach Anspruch 5 in Kombination mit einem der Ansprüche 2 bis 4, **dadurch gekennzeichnet**, daß sich die Seitenflanke (38) axial von einer äußeren radialen Kante (32) der Querflanke (28) aus erstreckt.

7. Rotierende elektrische Maschine nach Anspruch 6, **dadurch gekennzeichnet**, daß die Seitenflanke (38) durch einen Abschlußansatz (40) verlängert wird, der radial nach innen umgebogen ist, um mit einem formschlüssigen Abschnitt des Gehäuses (12) zusammenzuwirken.

8. Rotierende elektrische Maschine nach einem der vorangehenden Ansprüche, **dadurch gekennzeichnet**, daß die Schutzabdeckung (26) einen Griffansatz (42) umfaßt.

9. Rotierende elektrische Maschine nach Anspruch 8 in Kombination mit einem der Ansprüche 6 oder 7, **dadurch gekennzeichnet**, daß der Griffansatz (42) durch Ausschneiden und Biegen eines Teils der Seitenflanke (38) ausgeführt ist, deren Ausschnitt sich gegenüber einem Bereich (44) der Seitenwand (18) des Gehäuses erstreckt, der eine Markierung enthält.

10. Rotierende elektrische Maschine nach einem der vorangehenden Ansprüche, **dadurch gekennzeichnet**, daß die Schutzabdeckung (26) durch Ausschneiden und Biegen einer Folie oder eines Blatts, insbesondere eines Kartonblatts oder einer Kunststoff-Folie, ausgeführt ist.

11. Rotierende elektrische Maschine nach einem der vorangehenden Ansprüche, **dadurch gekennzeichnet**, daß sie ein Wechselstromgenerator für Kraftfahrzeuge ist.

12. Schutzabdeckung für eine rotierende elektrische Maschine, die nach einem der vorangehenden Ansprüche ausgeführt ist.

## Claims

1. Rotary electrical machine (10) with a cylindrical shape overall, delimited by a housing (12) having ventilation orifices (22, 24), characterised in that it has a removable protective cover (26) which at least partly matches the shape of the housing (12) and which extends opposite at least one orifice (22, 24) in order to temporarily protect the rotary electrical machine by preventing a risk of accidental entry of foreign bodies during the different stages following the manufacture proper of the machine before it is installed notably on a vehicle, or during operations of mechanical maintenance of the vehicle.

2. Rotary electrical machine according to Claim 1,
characterised in that the protective cover (26) has at least one transverse flank (28) in the form of a disc extending opposite an axial end face (14) of the housing (12).

3. Rotary electrical machine according to Claim 2,
characterised in that the transverse flank (28) has a radial slot (30) which opens out into a central hole (34), for the shaft of the rotor of the rotary machine (10) to pass.

4. Rotary electrical machine according to Claim 3,
characterised in that the end of the rotor shaft which extends outside the housing (12) carries a pulley (20), and in that the transverse flank (28) of the protective cover (26) is mounted between the pulley (20) and the axial end face (14) of the housing (12).

5. Rotary electrical machine according to any one of the preceding claims, characterised in that the protective cover (26) has a lateral flank (38) extending axially along the cylindrical lateral face (18) of the housing (12).

6. Rotary electrical machine according to Claim 5, taken in combination with any one of Claims 2 to 4, characterised in that the lateral flank (38) extends axially from an outer radial edge (32) of the transverse flank (28).

7. Rotary electrical machine according to Claim 6,
characterised in that the lateral flank (38) is extended by an end lug (40) folded radially inwards in order to cooperate with a portion, with a complementary shape, of the housing (12).

8. Rotary electrical machine according to any one of the preceding claims, characterised in that the protective cover (26) has a gripping lug (42).

9. Rotary electrical machine according to Claim 8 taken in combination with one of Claims 6 or 7, characterised in that the gripping lug (42) is produced by cropping and bending a part of the lateral flank (38) whose cut extends opposite an area (44) of the lateral wall (18) of the housing having a marking.

10. Rotary electrical machine according to any one of the preceding claims, characterised in that the protective cover (26) is produced by cropping and bending a sheet, notably a sheet of cardboard or plastics material.

11. Rotary electrical machine according to any one of the preceding claims, characterised in that it is a motor vehicle alternator.

12. Protective cover for a rotary electrical machine produced in accordance with any one of the preceding claims.
